Europäisches Patentamt

European Patent Office

Office européen des brevets

(11) Publication number: **0 347 142**
**A1**

## (12) EUROPEAN PATENT APPLICATION

(21) Application number: **89305905.5**

(22) Date of filing: **12.06.89**

(51) Int. Cl.⁴: **B60K 17/10 , E01H 1/08**

(30) Priority: **13.06.88 GB 8813948**

(43) Date of publication of application:
**20.12.89 Bulletin 89/51**

(84) Designated Contracting States:
**DE ES FR IT NL**

(71) Applicant: **SCARAB SALES LIMITED**
**Underlyn Farm Estate Maidstone Road**
**Marden Tonbridge Kent TN12 9BQ(GB)**

(72) Inventor: **Hoadley, Rodger Lloyd**
**41 Stocketts Lane**
**Coxheath Maidstone Kent, ME17 4PT(GB)**

(74) Representative: **Lewin, John Harvey et al**
**ELKINGTON AND FIFE Beacon House 113**
**Kingsway**
**London WC2B 6PP(GB)**

(54) **Road-sweeping vehicle.**

㉗ The invention relates to a road-sweeping vehicle. An auxillary gearbox (16) is interposed in the drive shaft (14, 15) between the engine and driving wheels (13). The auxillary gearbox can operate in mechanical mode in which the forward part of the drive shaft (14) is directly connected to the rear drive shaft (15) for normal driving. The auxillary gearbox is operated in hydrostatic mode when the vehicle is carrying out sweeping/cleaning operations. In this mode, the forward drive shaft (14) is used to drive a hydraulic pump (26) which operates a transmission motor (27) under control from the vehicle cab (11). The rear drive shaft (15) is then driven by the transmission motor (27), thereby providing fine control at low vehicle speeds, without the need for an auxillary engine.

Fig.3.

EP 0 347 142 A1

## Road-Sweeping Vehicle

This invention relates to a road-sweeping vehicle.

Various kinds of road-sweeping vehicle are known. They are generally based on a standard vehicle chassis and are provided with sweeping/cleaning attachments such as sweeping brushes, water jets, suction hose and the like. While such sweeping and cleaning is carried out, the vehicle proceeds slowly along the road, the exact speed depending on the severity of cleaning that is required.

Older road-sweeping vehicles were provided with a mechanical crawler gearbox to enable the normal vehicle engine to drive the vehicle at suitable slow speeds. The disadvantage of this system is that the engine speed has to be set to drive the sweeper unit, and because the drive to the rear wheels is mechanical the vehicle speed is fixed and cannot be varied to suit the sweeping conditions.

Attempts have been made to overcome the above problems by providing an auxillary engine (known as a donkey engine) for driving the sweeping equipment. However, this increases the expense of the vehicle, and the extra weight and physical size of the auxillary engine reduces the available pay load capacity and the hopper capacity.

We have sought to overcome the above difficulties by providing a means of controllably driving the vehicle at slow speeds whilst also driving the sweeping/cleaning attachments, both using a single main vehicle engine.

The present invention thus provides a road-sweeping vehicle comprising a vehicle body having an engine connected by a drive line to driving wheels, and sweeping/cleaning attachments powered by said engine, characterised in that an auxillary gearbox is interposed in the drive line, said auxillary gearbox having an input gear drivable by an input shaft which is in turn drivable by said engine, an output gear linked to an output shaft which is in driving engagement with said driving wheels, a pump gear engageable with said input gear and in driving engagement with a sweeping fan pump and with a transmission pump, a first hydraulic motor powered by said sweeping fan pump for driving the sweeping/cleaning attachments, a second hydraulic motor (transmission motor) powered by said transmission pump, a transmission gear drivable by said transmission motor and engageable with said output gear, means for controlling the output of the transmission pump, and means for

(1) engaging the input gear directly within the output gear for normal driving of the vehicle, the pump gear and transmission gear each being disengaged, and

(2) engaging the input gear with the pump gear, and the transmission gear with the output gear, for sweeping/cleaning whilst driving the vehicle using the transmission motor, the input gear not being engaged with the output gear.

A preferred embodiment of the invention is now described with reference to the accompanying drawings, in which:

Figure 1 is a schematic side view of a vehicle chassis showing the position of the auxillary gearbox;

Figure 2 is a plan view corresponding to Figure 1;

Figure 3 is a schematic diagram of the auxillary gearbox in the mechanical mode;

Figure 4 is a schematic diagram of the auxillary gearbox in the hydrostatic mode; and

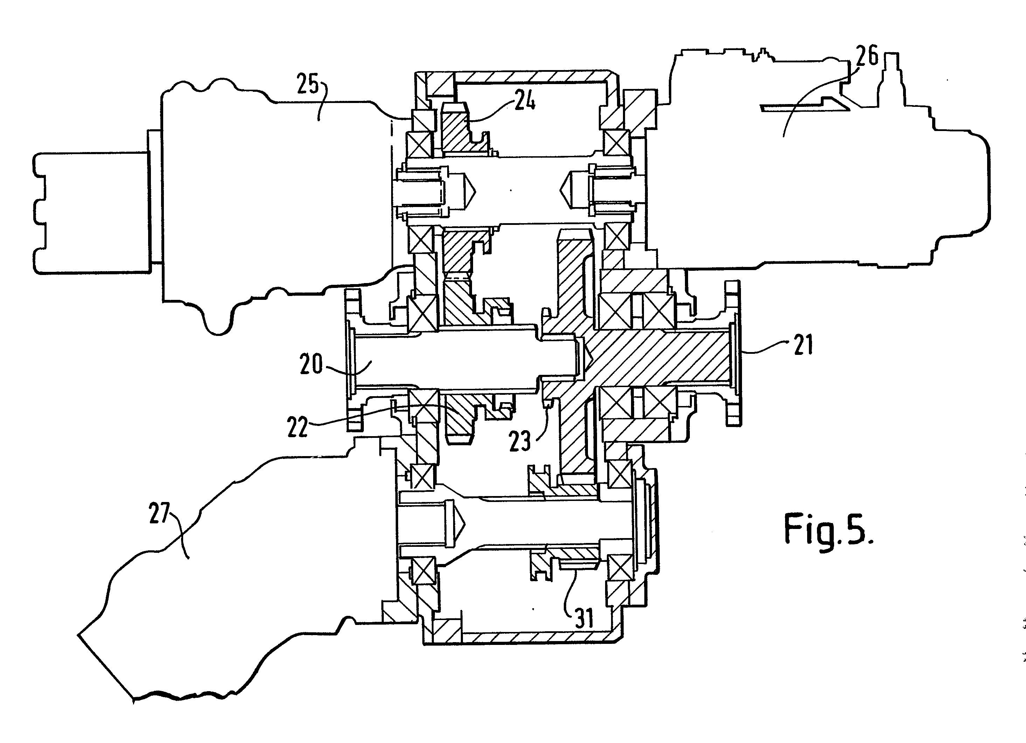

Figure 5 is a partially sectioned view of the auxillary gearbox in the hydrostatic mode.

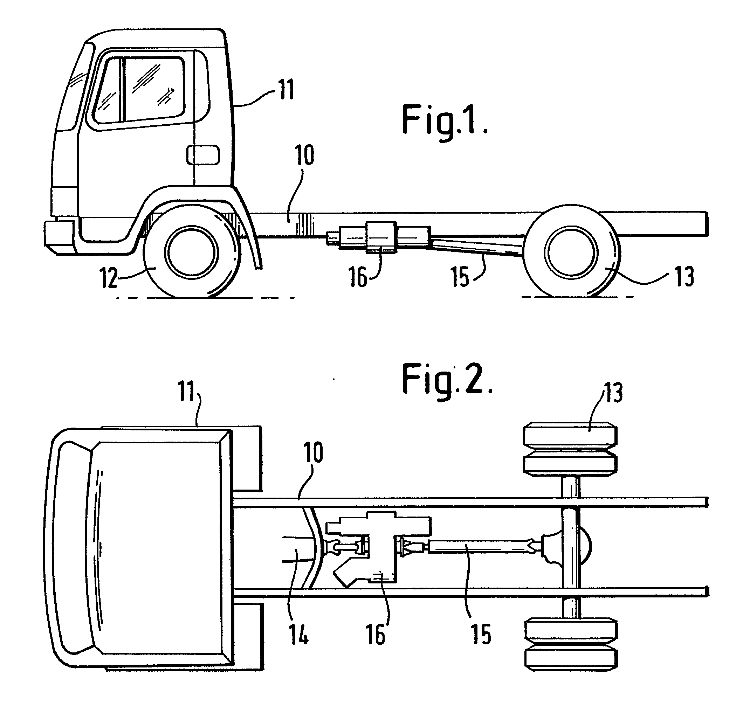

Referring first to Figures 1 and 2, the road-sweeping vehicle comprising a conventional vehicle chassis 10 with vehicle cab 11, front wheels 12 and rear driving wheels 13. The sweeping/cleaning attachments, hopper and the like are conventional and not shown. The drive line from the engine comprising a forward shaft 14 (which is connected to the engine via a conventional clutch and gearbox) and a rear shaft 15 which is connected to the rear axle in conventional manner. Interposed in the drive line between the forward shaft 14 and the rear shaft 15 is an auxillary gearbox 16.

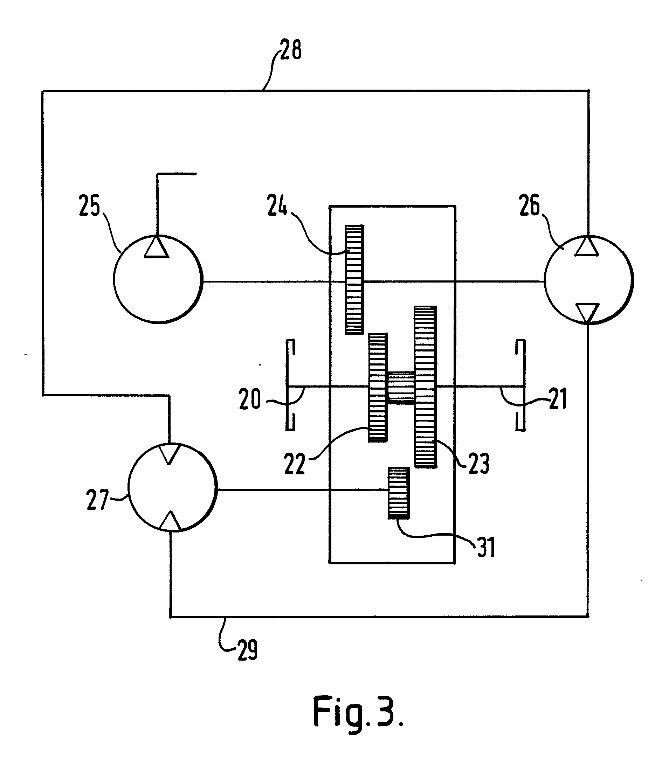

Referring now to Figure 3, the auxillary gearbox is provided with an input shaft 20 (directly connected to the forward shaft 14) and an output shaft 21 (directly connected to the rear shaft 15). The input shaft 20 drives an input gear 22. The output shaft 21 is driven by an output gear 23. In the normal driving mode (hereinafter referred to as "mechanical mode"), i.e. where the vehicle is being driven normally on the road before it has reached the area where it is to carry out sweeping/cleaning, the input gear 22 is directly engaged with the output gear 23. The vehicle can then be driven at normal speeds in the same manner as a conventional vehicle.

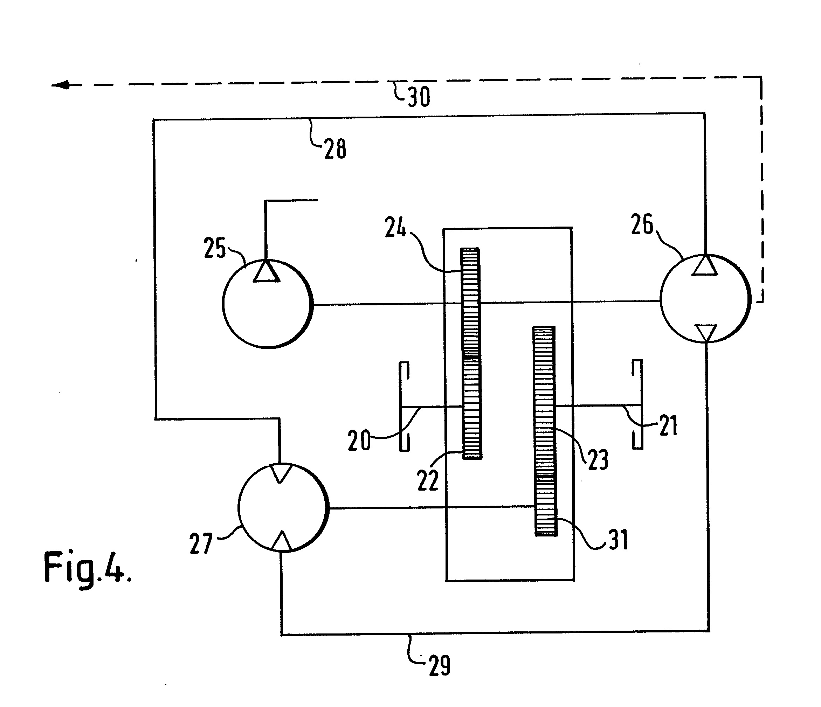

Referring now to Figures 3 and 4 together, the auxillary gearbox also includes a pump gear 24 which can be engaged with the input 22. In the mechanical mode shown in Figure 3, these two gears are disengaged from each other. The pump gear 24 drives two hydraulic pumps, a sweeping fan pump 25 and a transmission pump 26. A first hydraulic motor (not shown) is powered by the sweeping fan pump 25 and drives the sweeping/cleaning attachments on the vehicle. The means for driving such attachments by a hydraulic motor are well known in themselves, and are not therefore further described.

A second hydraulic motor 27 (also called a transmission motor) is powered by the transmission pump 26. Two hydraulic lines 28 and 29 link the transmission pump 26 with the transmission motor 27, so that the transmission motor can be driven in forward and reverse directions. The output of the transmission pump 26 is governed by a control in the vehicle cab, thereby controlling the flow of hydraulic fluid from the transmission pump to the transmission motor, and giving infinite speed control of the transmission motor in both forward and reverse directions. The control line between the vehicle cab and the transmission pump 26 is shown by the chain line 30 in Figure 4.

The auxillary gearbox also includes a transmission gear 31 which is driven by the transmission motor 27. The transmission gear 31 can be engaged with the output gear 23. However, in the mechanical mode shown in Figure 3, these two gears are disengaged.

Engagement between the respective gears in the auxillary gearbox is controlled from the vehicle cab. Means for engaging and disengaging gears are, of course, well known in themselves and are not therefore described in detail. In the mechanical mode, for normal driving of the vehicle, as shown in Figure 3, the input gear 22 is directly engaged with the output gear 23, and the pump gear 24 and transmission gear 31 are each disengaged.

When road-sweeping/cleaning is to commence, the auxillary gearbox is changed to hydrostatic mode, as shown in Figure 4. The input gear 22 is disengaged from the output gear 23. The vehicle engine is set to a recommended speed and top gear is engaged in the main vehicle gearbox. The input gear 22 is engaged with the pump gear 24. The two hydraulic pumps 25 and 26 are thus now operating. The sweeping fan pump 25 thus causes the sweeping/cleaning attachments to operate, and these are controlled from the vehicle cab in conventional manner. The transmission pump 26 causes the transmission motor 27 to operate. The transmission gear 31 is engaged with the output gear 23. The vehicle is thus now being driven under the control of the transmission pump 26 and transmission motor 27. The speed of the vehicle, both in forward and reverse direction, can be finely controlled from the vehicle cab via the control line 30. Typical vehicle speeds in this hydrostatic mode are 0 to 10 kph in forward and reverse. This provides optimum sweeping speeds to cover all road conditions.

By the use of the special auxillary gearbox according to the present invention, the normal auxillary engine is dispensed with, reducing service needs to the vehicle itself without the disadvantages of the early single engine machines. The hydrostatic drive gives the operator perfect control of vehicle speed to suit all conditions from a very slow creep to cater for the worst conditions of compacted mud, to high speed for those stretches of road which are relatively clear. It also eliminates clutch wear and brake glaze, problems which occur frequently on traditional mechanical drives.

## Claims

A road-sweeping vehicle comprising a vehicle body (10,11) having an engine connected by a drive line (14,15) to driving wheels (13), and sweeping/cleaning attachments powered by said engine, characterised in that an auxillary gearbox (16) is interposed in the drive line, said auxillary gearbox having an input gear (22) drivable by an input shaft (20) which is in turn drivable by said engine, an output gear (23) linked to an output shaft (22) which is in driving engagement with said driving wheels, a pump gear (24) engageable with said input gear and in driving engagement with a sweeping fan pump (25) and with a transmission pump (26), a first hydraulic motor powered by said sweeping fan pump for driving the sweeping/cleaning attachments, a second hydraulic motor (27) (transmission motor) powered by said transmission pump, a transmission gear (31) drivable by said transmission motor and engageable with said output gear, means (30) for controlling the output of the transmission pump, and means for

(1) engaging the input gear directly within the output gear for normal driving of the vehicle, the pump gear and transmission gear each being disengaged, and

(2) engaging the input gear with the pump gear, and the transmission gear with the output gear, for sweeping/cleaning whilst driving the vehicle using the transmission motor, the input gear not being engaged with the output gear.

Fig.1.

Fig.2.

28

25    24    26

20    22    23    21

27    31

29

Fig. 3.

Fig.4.

EP 0 347 142 A1

Fig.5.

EP 0 347 142 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 454 450 (KELLER & KNAPPICH) * Page 2, paragraph 5 - page 3, paragraph 1; figure 1 * | 1 | B 60 K 17/10 E 01 H 1/08 |
| A | DE-A-2 915 964 (MARKS) * Page 7; paragraph 3 - page 8, paragraph 3 * | 1 | |

TECHNICAL FIELDS SEARCHED (Int. Cl.4)

B 60 K

The present search report has been drawn up for all claims

| Place of search | Date of completion of the search | Examiner |
|---|---|---|
| THE HAGUE | 09-08-1989 | FLODSTROEM J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)